# EUROPÄISCHE PATENTSCHRIFT

(11) **EP 2 092 217 B1**
(45) Veröffentlichungstag und Bekanntmachung des Hinweises auf die Patenterteilung: **22.12.2010**
(21) Anmeldenummer: 07803164.8
(22) Anmeldetag: 03.09.2007
(51) Int. Cl.: F16H 57/04

(54) **DIFFERENTIAL MIT EINER EINRICHTUNG ZUR OPTIMIERUNG DER FÖRDERFUNKTION DES TELLERRADS DES DIFFERENTIALS IN BEZUG AUF MAXIMALEN VOLUMENSTROM**
DIFFERENTIAL WITH A DEVICE FOR OPTIMIZING THE FEED FUNCTION OF THE RING GEAR OF THE DIFFERENTIAL WITH REGARD TO MAXIMUM VOLUME FLOW RATE
DIFFÉRENTIEL AVEC UN DISPOSITIF D'OPTIMISATION DE LA FONCTION DE TRANSPORT DE LA COURONNE DE LA DIFFÉRENTIEL PAR RAPPORT À SON DÉBIT VOLUMIQUE MAXIMAL

(30) Priorität: 26.09.2006 DE 102006045239
(43) Veröffentlichungstag der Anmeldung: 26.08.2009
(73) Patentinhaber: ZF Friedrichshafen AG, 88038 Friedrichshafen (DE); Dr. Ing. h.c. F. Porsche AG, 70435 Stuttgart (DE)
(72) Erfinder: ALTVATER, Roland, 88046 Friedrichshafen (DE); GLÜCK, Martin, 14770 Brandenburg (DE); JABS, Sven, 88250 Weingarten (DE)
(86) Internationale Anmeldenummer: PCT/EP2007/059178
(87) Internationale Veröffentlichungsnummer: WO 2008/037565

(56) Entgegenhaltungen:
- DE-A1- 10 162 864
- US-A- 4 693 133

## Beschreibung

Die vorliegende Erfindung bezieht sich auf ein Differential mit einer Einrichtung zur Optimierung der Förderfunktion des Tellerrads des Differentials in Bezug auf maximalen Volumenstrom gemäß dem Oberbegriff des Patentanspruchs 1.

Eine solches Differential ist aus der DE10162 864 A1 bekannt.

Aus dem Stand der Technik ist bekannt, die Pumpwirkung des Tellerrads des Differentials in Getrieben mit integriertem Achsantrieb zur Umwälzung des Ölvolumens zu nutzen. Hierbei wird das Öl von der Tellerradverzahnung in Umfangsrichtung mitgezogen und mit der angenommenen Geschwindigkeit des Tellerrades abgeführt. Auf diese Weise bildet sich um das drehende Tellerrad ein Ölstrom, der aber infolge der offenen Konstruktion eines Differentials verwirbelt, so dass sich die nutzbare Fördermenge in nachteiliger Weise erheblich reduziert; eine gezielte Optimierung der Förderfunktion des Tellerrads in Bezug auf maximalen Volumenstrom ist aus dem Stand der Technik nicht bekannt.

Der vorliegenden Erfindung liegt die Aufgabe zugrunde, ein Differential mit einer Einrichtung zur Optimierung der Förderfunktion des Tellerrads des Differentials in Bezug auf maximalen Volumenstrom anzugeben, bei der die nutzbare Ölfördermenge im Vergleich zu den aus dem Stand der Technik bekannten Konstruktionen erhöht ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Differential mit einer Einrichtung zur Optimierung der Förderfunktion des Tellerrads des Differentials in Bezug auf maximalen Volumenstrom vorgeschlagen, welche Einrichtung eine Ringscheibe umfasst, die axial betrachtet neben dem Tellerrad an dessen dem Differentialkorb zugewandten Seite und koaxial zum Tellerrad angeordnet ist, die als Abstreifring dient. Gemäß einer vorteilhaften Weiterbildung der Erfindung ist die Ringscheibe derart dimensioniert, dass sie mit ihrem Außendurchmesser gegenüber dem Differentialdeckel abdichtet.

Des weiteren kann erfindungsgemäß vorgesehen sein, dass der Innendurchmesser der Ringscheibe einen möglichst geringen Abstand zum Tellerrad bzw. zum Differentialkorb in axialer und radialer Richtung aufweist.

Durch die erfindungsgemäße Konzeption findet das von der Tellerradverzahnung in Umfangsrichtung mitgezogene Öl eine Barriere, die ein Auffächern des Ölstroms bzw. Ölrings um das Tellerrad verhindert, wodurch die Förderfunktion des Tellerrads in Bezug auf maximalen Volumenstrom optimiert wird.

Die Erfindung wird im folgenden anhand der beigefügten Figuren beispielhaft näher erläutert.
Es zeigen:
- Fig. 1: eine schematische Schnittansicht eines in einem Differen- tialkorb angeordneten Tellerrades eines Differentials ohne die erfindungsgemäße Einrichtung zur Umlenkung von Schleuderöl und eine Darstellung der bei sich drehendem Tellerrad entstehenden Strömungsverhältnisse und
- Fig. 2: eine schematische Schnittansicht eines in einem Differen- tialkorb angeordneten Tellerrades eines Differentials, um- fassend die erfindungsgemäße Einrichtung zur Umlenkung von Schleuderöl und eine Darstellung der bei sich drehen- dem Tellerrad entstehenden Strömungsverhältnisse.

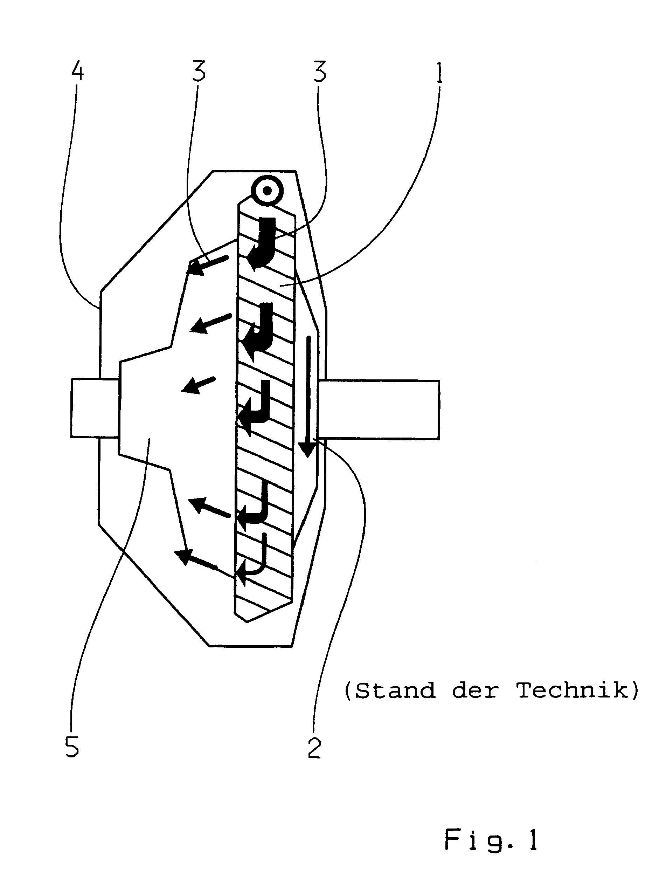

In Fig. 1 ist ein Differential gezeigt, umfassend ein Tellerrad 1, welches sich in Richtung des Pfeils 2 dreht. In der Figur sind der Differentialkorb und der Differentialdeckel dargestellt und mit 5 bzw. 4 bezeichnet. Hierbei wird das Öl aufgrund der Drehbewegung des Tellerrades 1 von der Tellerradverzahnung in Umfangsrichtung mitgezogen und mit der Geschwindigkeit des Tellerrades 1 abgeführt. Der hierbei entstehende Ölstrom ist in der Figur durch die Pfeile 3 dargestellt. Wie aus der Figur ersichtlich, wird der Ölstrom infolge der offenen Konstruktion eines Differentials verwirbelt, so dass sich die nutzbare Fördermenge erheblich reduziert.

Um dieses Problem zu lösen, wird gemäß der Erfindung vorgeschlagen, axial betrachtet neben dem Tellerrad 1 an dessen dem Differentialkorb 5 zugewandten Seite und koaxial dazu eine Ringscheibe 6 mit kleinstmöglichem Abstand zu montieren, die als Abstreifring dient, welche mit ihrem Außendurchmesser gegenüber dem Differentialdeckel 4 abdichtet.

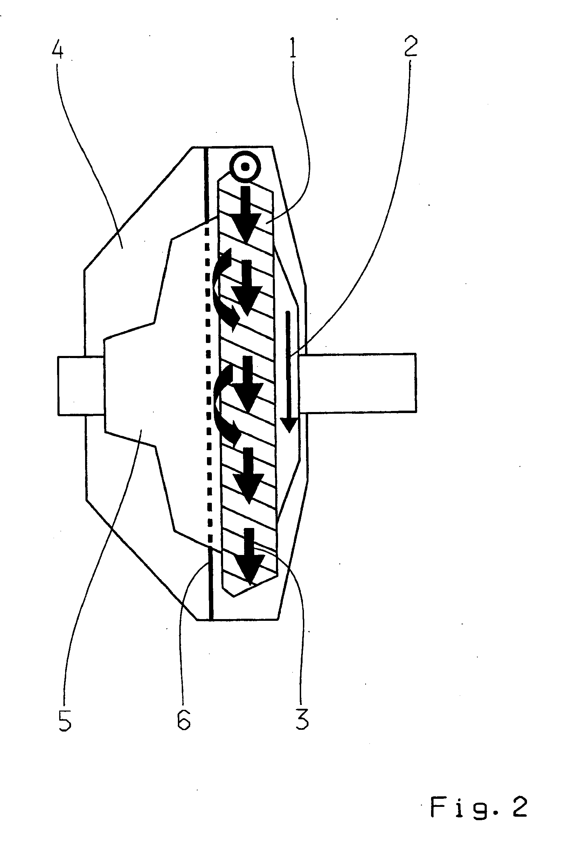

Gemäß der Erfindung weist der Innendurchmesser der Ringscheibe 6 einen möglichst geringen Abstand zum Tellerrad 1 bzw. zum Differentialkorb 5 in axialer und radialer Richtung auf. Durch die erfindungsgemäße Konzeption findet das von der Tellerradverzahnung in Umfangsrichtung mitgezogene Öl eine Barriere, die ein Auffächern des Ölstroms bzw. Ölrings um das Tellerrad verhindert, wodurch die Förderfunktion des Tellerrads 1 in Bezug auf maximalen Volumenstrom optimiert wird. Der optimierte Ölstrom ist in Fig. 2 durch die Pfeile 3 dargestellt.

### Bezugszeichen

- 1: Tellerrad
- 2: Drehrichtung des Tellerrades
- 3: Ölstrom
- 4: Differentialdeckel
- 5: Differentialkorb
- 6: Ringscheibe

## Patentansprüche

1. Differential mit einer Einrichtung zur Optimierung der Förderfunktion des Tellerrads des Differentials in Bezug auf maximalen Volumenstrom, welche Einrichtung eine Ringscheibe (6) umfasst, **dadurch gekennzeichnet, dass** die Ringscheibe (6) axial betrachtet neben dem Tellerrad (1) an dessen dem Differentialkorb (5) zugewandten Seite und koaxial zum Tellerrad (1) angeordnet ist und als Abstreifring dient.

2. Differential mit einer Einrichtung zur Optimierung der Förderfunktion des Tellerrads des Differentials in Bezug auf maximalen Volumenstrom nach Anspruch 1, **dadurch gekennzeichnet, dass** die Ringscheibe (6) mit ihrem Außendurchmesser gegenüber dem Differentialdeckel (4) abdichtet.

3. Differential mit einer Einrichtung zur Optimierung der Förderfunktion des Tellerrads des Differentials in Bezug auf maximalen Volumenstrom nach Anspruch 2, **dadurch gekennzeichnet, dass** der Innendurchmesser der Ringscheibe (6) einen möglichst geringen Abstand zum Tellerrad (1) bzw. zum Differentialkorb (5) in axialer und radialer Richtung aufweist, derart, dass das von der Tellerradverzahnung in Umfangsrichtung mitgezogene Öl eine Barriere findet, die ein Auffächern des Ölstroms bzw. Ölrings um das Tellerrad verhindert, wodurch die Förderfunktion des Tellerrads (1) in Bezug auf maximalen Volumenstrom optimiert wird.

## Claims

1. Differential having a device for optimizing the feed function of the ring gear of the differential with regard to maximum volume flow, which device comprises an annular disc (6), **characterized in that** the annular disc (6) is arranged axially next to the ring gear (1), on its side facing the differential cage (5), and coaxially to the ring gear (1) and serves as a wiper ring.

2. Differential having a device for optimizing the feed function of the ring gear of the differential with regard to maximum volume flow according to Claim 1, **characterized in that** the annular disc (6) seals off by means of its outside diameter with respect to the differential cover (4).

3. Differential having a device for optimizing the feed function of the ring gear of the differential with regard to maximum volume flow according to Claim 2, **characterized in that** the inside diameter of the annular disc (6) is at as short a distance as possible from the ring gear (1) or from the differential cage (5) in the axial or the radial direction, in such a way that the oil entrained in the circumferential direction by the ring-gear toothing finds a barrier which prevents the oil stream or oil ring around the ring gear from being fanned open, with the result that the feed function of the ring gear (1) is optimized with regard to maximum volume flow.

## Revendications

1. Différentiel comprenant un dispositif pour optimiser la fonction de transport de la couronne du différentiel par rapport au débit volumique maximal, lequel dispositif comprend un disque annulaire (6), **caractérisé en ce que** le disque annulaire (6), considéré axialement, est disposé à côté de la couronne (1) sur son côté tourné vers la coquille de différentiel (5), et coaxialement à la couronne (1), et sert de bague de grattage.

2. Différentiel comprenant un dispositif pour optimiser la fonction de transport de la couronne du différentiel par rapport au débit volumique maximal selon la revendication 1, **caractérisé en ce que** le disque annulaire (6), avec son diamètre extérieur, réalise l'étanchéité vis-à-vis du couvercle de différentiel (4).

3. Différentiel comprenant un dispositif pour optimiser la fonction de transport de la couronne du différentiel par rapport au débit volumique maximal selon la revendication 2, **caractérisé en ce que** le diamètre intérieur du disque annulaire (6) présente une distance aussi faible que possible à la couronne (1) ou à la coquille de différentiel (5) dans la direction axiale et radiale, de telle sorte que l'huile entraînée par la denture de la couronne dans la direction périphérique trouve une barrière qui empêche un étalement du courant d'huile ou du cercle d'huile autour de la couronne, de sorte que la fonction de transport de la couronne (1) soit optimisée par rapport à un débit volumique maximal.
